# EUROPÄISCHE PATENTANMELDUNG

(11) **EP 2 527 310 A1**
(43) Veröffentlichungstag der Anmeldung: **28.11.2012**
(21) Anmeldenummer: 11167672.2
(22) Anmeldetag: 26.05.2011
(51) Int. Cl.: C04B 40/00, C04B 24/12, C04B 28/04

(54) **Erhärtungsbeschleuniger für mineralische Bindemittelzusammensetzungen**

(71) Anmelder: Sika Technology AG, 6340 Baar (CH)
(72) Erfinder: Kurz, Christophe, 8165 Oberengstringen (CH); Marazzani, Beat, 8102 Oberengstringen (CH); Bürge, Christian, 5503 Schafisheim (CH); Mäder, Gilbert, 8460 Marthalen (CH)
(74) Vertreter: Sika Patent Attorneys

(57) **Zusammenfassung**

Ein Erhärtungsbeschleuniger für mineralische Bindemittelzusammensetzungen, insbesondere zementöse Bindemittelzusammensetzungen, beinhaltet eine Kombination aus
a) einem ersten Aminoalkohol (**A**) mit wenigstens einer primären Alkoholgruppe und
b) einem zweiten Aminoalkohol (**E**) mit wenigstens einer sekundären Alkoholgruppe.

## Beschreibung

### Technisches Gebiet

Die Erfindung betrifft Erhärtungsbeschleuniger für mineralische Bindemittelzusammensetzungen sowie eine mineralische Bindemittelzusammensetzung enthaltend einen Erhärtungsbeschleuniger. Des Weiteren bezieht sich die Erfindung auf einen Formkörper, erhältlich durch Aushärten einer mineralischen Bindemittelzusammensetzung, sowie mehrere Verwendungen eines Erhärtungsbeschleunigers.

### Stand der Technik

Erhärtungsbeschleuniger werden in mineralischen Bindemitteln eingesetzt um das Erhärten von Bindemittelzusammensetzungen nach dem Anmachen mit Wasser zu beschleunigen. Dies kann z.B. notwenig sein, um ein Betonieren bei tiefen Temperaturen zu ermöglichen oder um die Frühfestigkeit von Mörtel-oder Betonzusammensetzungen zu erhöhen.

In diesem Zusammenhang sind verschiedene Substanzen bekannt, welche das Erhärten von mineralischen Bindemitteln, insbesondere zementösen Bindemitteln, beschleunigen. Gebräuchlich sind beispielsweise Erhärtungsbeschleuniger basierend auf Aminoalkoholen, Halogeniden, Pseudohalogeniden, Nitriten, Nitraten, Aluminiumsalzen, Alkalihydroxiden, Erdalkalihydroxiden, Glykolen, Glyzerin oder α-Hydroxycarbonsäuren.

Die WO 2003/000617 A1 (Sika AG) beschreibt z.B. einen Erhärtungsbeschleuniger basierend auf einem Alkanolamin, einem anorganischen Nitrat, einer Carbonsäure und einem Polyol.

Bekannte Erhärtungbeschleuinger weisen jedoch verschiedene Nachteile auf. So besteht bei Halogeniden, Pseudohalogeniden, Nitriten und Nitraten in Beton die Gefahr von Spannungsrisskorrosion an Spannstählen. Alkalihydroxide, Aluminiumsalze, Glykole und Glyzerin zeigen häufig ein unerwünschtes Ansteifverhalten und α-Hydroxycarbonsäuren sind dosierungssensitiv.

Es besteht daher nach wie vor Bedarf nach verbesserten Erhärtungsbeschleunigern für mineralische Bindemittel, welche die vorstehend genannten Nachteile nicht aufweisen.

### Darstellung der Erfindung

Aufgabe der Erfindung ist es daher, einen verbesserten Erhärtungsbeschleuniger für mineralische Bindemittelzusammensetzungen zu schaffen. Der erfindungsgemässe Erhärtungsbeschleuniger soll gegenüber bekannten Erhärtungsbeschleunigern insbesondere höhere Frühdruckfestigkeiten von Mörtel-und/oder Betonzusammensetzungen ermöglich.

Überraschenderweise wurde gefunden, dass die erfindungsgemässe Aufgabe durch einen Erhärtungsbeschleuniger gemäss Anspruch 1 gelöst werden kann.

Demnach beinhaltet der erfindungsgemässe Erhärtungsbeschleuniger eine Kombination aus
a) einem ersten Aminoalkohol (**A**) mit wenigstens einer primären Alkoholgruppe und
b) einem zweiten Aminoalkohol (**E**) mit wenigstens einer sekundären Alkoholgruppe.

Wie sich gezeigt hat, kann durch die erfindungsgemässe Kombination von Aminoalkoholen die Frühdruckfestigkeit von mineralischen Bindemittelzusammensetzungen signifikant erhöht werden. Dies in einem Masse, welches über der maximal erreichbaren Frühdruckfestigkeit bei optimaler Dosierung von nur einem der beiden Aminoalkohole (**A**) oder (**E**) liegt, Insbesondere ist es durch die erfindungsgemässe Kombination von Aminoalkoholen sogar möglich, Frühdruckfestigkeiten zu erreichen, welche höher sind, als die Summe der Frühdruckfestigkeiten der einzelnen Aminoalkohole bei optimaler Dosierung zusammen. Mit anderen Worten wirken die Aminoalkohole in der erfindungsgemässen Kombination synergetisch zusammen.

Im Vergleich mit einer Nullprobe ohne zugesetzten Erhärtungsbeschleuniger lassen sich mit den erfindungsgemässen Erhärtungsbeschleunigern die Frühdruckfestigkeiten nach 24 Stunden bzw. 1 Tag um bis zu 22% steigern.

Überraschenderweise wurde auch gefunden, dass sich die benötigten Mengen an Aminoalkoholen aufgrund der erfindungsgemässen Kombination im Vergleich mit den einzeln eingesetzten Aminoalkoholen teilweise markant reduzieren lassen und zugleich eine Verbesserung der Frühdruckfestigkeit erzielbar ist.

Zudem wurde gefunden, dass die erfindungsgemässen Erhärtungsbeschleuniger bezüglich unerwünschtem Ansteifverhalten von zementösen Systemen unproblematisch sind. Weiter kann aufgrund der Zusammensetzung der erfindungsgemässen Erhärtungsbeschleuniger davon ausgegangen werden, dass die Gefahr von Spannungsrisskorrosion von Spannstählen in Betonbauten bei Verwendung der Erhärtungsbeschleuniger gering ist. Des Weiteren ist die Dosierungssensitivität im Vergleich zu bekannten Erhärtungsbeschleunigern gering.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft einen Erhärtungsbeschleuniger für mineralische Bindemittelzusammensetzungen, beinhaltend eine Kombination aus
a) einem ersten Aminoalkohol (**A**) mit wenigstens einer primären Alkoholgruppe und
b) einem zweiten Aminoalkohol (**E**) mit wenigstens einer sekundären Alkoholgruppe.

Die beiden Aminoalkohole (**A**) und (**E**) sind dabei insbesondere individuelle und/oder chemisch unterscheidbare Substanzen.

Der erste und der zweite Aminoalkohol werden lediglich der Klarheit halber mit den Buchstaben **A** bzw. **E** gekennzeichnet. Diese Kennzeichnung ist in keiner Weise einschränkend zu verstehen.

Grundsätzlich können die beiden Aminoalkohole (**A**) und (**E**) unabhängig voneinander als solche und/oder in Form von Salzen vorliegen. Aminoalkohole also solche sind entsprechend keine Salze. Auch Mischungen aus Salzen und Aminoalkoholen als solche sind möglich. In einer vorteilhaften Ausführungsform werden der erste Aminoalkohol (**A**) und der zweite Aminoalkohol (**E**) als solche oder als Reinsubstanzen eingesetzt. In diesem Fall liegen die beiden Aminoalkohol (**A**) und (**E**) entsprechend nicht als Salze vor. Dies erleichtert insbesondere die Herstellung oder Bereitstellung der Aminoalkohole.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%, Insbesondere ist der Zement vom Typ CEM I (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5-95 Gew.-%, insbesondere 5-65 Gew.-%, im Speziellen 15-35 Gew.-%, latenthydraulische und/oder puzzolanische Bindemittel.

Allgemein werden Alkohole oder Alkoholgruppen nach der Anzahl der Nichtwasserstoffnachbarn des Kohlenstoffatoms, an welchem sich die Hydroxyruppe befindet, eingeteilt. Bei primären Alkoholen oder Alkoholgruppen trägt das Hydroxygruppen-tragende Kohlenstoffatom genau zwei Wasserstoffatome und ein Nichtwasserstoffatom, bei sekundären Alkoholen genau ein Wasserstoffatom und zwei Nichtwasserstoffatome, und bei tertiären gar kein Wasserstoffatom und drei Nichtwasserstoffatome.

Unter einer "primären Alkoholgruppe" wird im vorliegenden Zusammenhang daher insbesondere eine Gruppe der Formel (I) verstanden. Entsprechend ist eine "sekundäre Alkoholgruppe" vorliegend insbesondere eine Gruppe der Formel (II).

R¹-CH₂-OH (I)

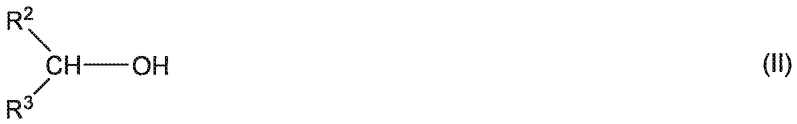

R¹, R² und R³ stellen dabei organische Reste dar, welche über Nichtwasserstoffatome, insbesondere Kohlenstoffatome, an das Hydroxygruppen-tragende Kohlenstoffatom gebunden sind.

Eine analoge Einteilung existiert auch bei den Aminen oderAmingruppen. Eine Amingruppe, welche genau zwei Wasserstoff-Atome und ein Nichtwasserstoffatom trägt wird als primäre Amingruppe bezeichnet. Eine Amingruppe, welche genau ein Wasserstoffatom und zwei Nichtwasserstoffatome trägt wird als sekundäre Amingruppe bezeichnet, während eine Amingruppe, welche kein Wasserstoff-Atom und drei Nichtwasserstoffatome trägt, als tertiäre Amingruppe bezeichnet wird.

Unter einer "primären Amingruppe" wird im vorliegenden Zusammenhang daher insbesondere eine Gruppe der Formel (III) verstanden. Eine "sekundäre Amingruppe" ist vorliegend insbesondere eine Gruppe der Formel (IV). Unter einer "tertiären Amingruppe" wird entsprechend insbesondere eine Gruppe der Formel (V) verstanden.

R⁴-NH₂ (III)

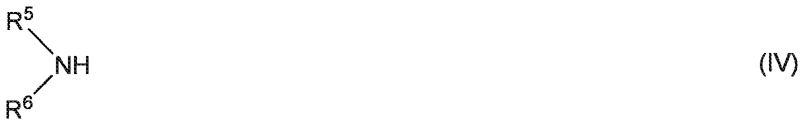

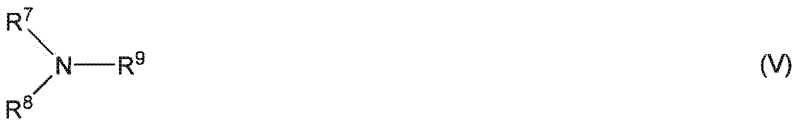

R⁴, R⁵, R⁶, R⁷, R⁸ und R⁹ stellen dabei organische Reste dar, welche über Nichtwasserstoffatome, insbesondere Kohlenstoffatome, an das Stickstoffatom gebunden sind.

Unter "Frühdruckfestigkeit" wird im vorliegenden Zusammenhang insbesondere eine Druckfestigkeit nach 24 Stunden verstanden. Die Druckfestigkeiten sind insbesondere entsprechend der Norm EN 12390-3 definiert.

Gemäss einer bevorzugten Ausführungsform weist der erste Aminoalkohol (**A**) wenigstens zwei primäre Alkoholgruppen auf. Insbesondere kann es auch vorteilhaft sein, wenn der erste Aminoalkohol (**A**) über wenigstens drei primäre Alkoholgruppen verfügt.

Weiter bevorzugt sind sämtliche Alkoholgruppen des ersten Aminalkohols (**A**) primäre Alkoholgruppen. In diesem Fall verfügt der erste Aminoalkohol insbesondere nicht über sekundäre und/oder tertiäre Alkoholgruppen.

Insbesondere weist der erste Aminoalkohol (**A**) wenigstens eine primäre und/oder wenigstens eine sekundäre Amingruppe auf. Im Speziellen verfügt der der erste Aminoalkohol (**A**) ausschliesslich über primäre und/oder sekundäre Amingruppen. Insbesondere beinhaltet der erste Aminoalkohol (**A**) keine tertiäre Amingruppe.

Prinzipiell ist es aber auch möglich, dass der erste Aminoalkohol (**A**) sowohl primäre als auch sekundäre Alkoholgruppen aufweist. Ebenso kann der erste Aminoalkohol grundsätzlich primäre, sekundäre und/oder tertiäre Amingruppen aufweisen. In diesen Fällen ist mit Vorteil die Anzahl an primären Alkoholgruppen im ersten Aminoalkohol (**A**) grösser als die Anzahl an sekundären Alkoholgruppen. Weiter vorteilhaft in diesen Fällen ist die Anzahl an primären Alkoholgruppen plus die Anzahl der primären und sekundären Amingruppen im ersten Aminoalkohol **A** grösser als die Anzahl an sekundären Alkoholgruppen plus die Anzahl der tertiären Amingruppen.

Der erste Aminoalkohol (**A**) ist insbesondere ausgewählt aus N-Ethyldiethanolamin (EDEA), N-Butyldiethanolamin (BDEA), Triethanolamin (TEA), 2-(Diisopropylamino)ethanol, 2-(2-Aminoethylamino)ethanol, N,N,N'-Trimethylaminoethylethanolamin, N,N'-Bis-(2-hydroxyethyl)ethylendiamin, N-Methyldiethanolamin (MDEA), Diethanolamin (DEA), 2-Amino-2-methyl-1,3-propandiol (AMPD), Tris-(hydroxymethyl)-aminomethan (TRIS), 3-Amino-1,2-propandiol (APD) und/oder 2-(2-Aminoethoxy)ethanol. Es sind aber grundsätzlich auch andere Aminoalkohole einsetzbar.

Besonders vorteilhaft ist der erste Aminoalkohol (**A**) Tris-(hydroxymethyl)-aminomethan (TRIS), N-Methyldiethanolamin (MDEA), Diethanolamin (DEA) und/oder 2-Amino-2-methyl-1,3-propandiol (AMPD). Insbesondere ist der erste Aminoalkohol (**A**) Tris-(hydroxymethyl)-aminomethan und/oder N-Methyldiethanolamin (MDEA).

Diese Vertreter von Aminoalkoholen (**A**) haben sich im Hinblick auf die erfindungsgemässen Vorteile als besonders geeignet erwiesen. Insbesondere können mit den letztgenannten Aminoalkoholen hohe Wirkungen bei geringen Dosierungen erreicht werden.

Der zweite Aminoalkohol (**E**) weist insbesondere wenigstens zwei sekundäre Alkoholgruppen auf. In einer bevorzugten Variante sind sämtliche Alkoholgruppen des zweiten Aminalkohols (**E**) ausschliesslich sekundäre Alkoholgruppen. Insbesondere beinhaltet der zweite Aminoalkohol (**E**) in diesem Fall keine primären und/oder tertiären Alkoholgruppen.

Im Besonderen weist der zweite Aminoalkohol (**E**) wenigstens eine tertiäre Amingruppe auf. Insbesondere beinhaltet der zweite Aminoalkohol (**E**) ausschliesslich tertiäre Amingruppen.

Prinzipiell ist es aber auch möglich, dass der zweite Aminoalkohol (**E**) sowohl primäre als auch sekundäre Alkoholgruppen aufweist. Ebenso kann der erste Aminoalkohol grundsätzlich primäre, sekundäre und/oder tertiäre Amingruppen aufweisen. In diesen Fällen ist mit Vorteil die Anzahl an sekundären Alkoholgruppen im zweiten Aminoalkohol (**E**) grösser als die Anzahl an primären Alkoholgruppen. Weiter vorteilhaft ist in diesen Fällen die Anzahl an sekundären Alkoholgruppen plus die Anzahl der teriären Amingruppen im zweiten Aminoalkohol (**E**) grösser als die Anzahl an primären Alkoholgruppen plus die Anzahl an primären und sekundären Amingruppen.

Der zweite Aminoalkohol (**E**) ist insbesondere ausgewählt aus Dlisopropanolamin (DiPA), Triisopropanolamin (TiPA), N,N,N',N'-Tetrakis(2-hydroxypropyl)-ethylendiamin (THPED) und/oder N-Methyldiisopropanolamin (MDiPA).

Gemäss einer vorteilhaften Ausführungsform ist der zweite Aminoalkohol (**E**) Triisopropanolamin (TiPA), N,N,N',N'-Tetrakis(2-hydroxypropyl)-ethylendiamin (THPED) und/oder N-Methyldiisopropanolamin (MDiPA). Ganz besonders vorteilhaft ist der zweite Aminoalkohol (**E**) N-Methyldiisopropanoiamin (MDiPA).

Deratige Aminoalkohole (**E**) haben sich in Kombination mit den vorstehend genannten Aminoalkoholen (**A**) als besonders vorteilhaft erwiesen.

Der erste Aminoalkohol (**A**) und/oder der zweite Aminoalkohol (**E**) bestehen gemäss einer bevorzugten Variante ausschliesslich aus C-, H-, N- und O-Atomen.

Wie es sich gezeigt hat, liegt das Molekulargewicht M_{w} des ersten Aminoalkohols (**A**) und/oder des zweiten Aminoalkohols (**E**) zudem vorteilhafterweise im Bereich von 60 - 500 g/mol, insbesondere 80 - 300 g/mol, bevorzugt 100 - 300 g/mol, liegt. Ein Molekulargewicht pro Alkoholgruppe (M_{w}/Anzahl OH) des ersten Aminoalkohols (**A**) und/oder des zweiten Aminoalkohols (**E**) liegt dabei mit Vorteil im Bereich von 30-150 g/mol, insbesondere 35-120 g/mol.

Aminoalkohole mit derartigen Molekulargewichten zeigen eine optimale Wirkung als Komponenten der erfindungsgemässen Erhärtungsbeschleuniger.

Besonders bevorzugt ist der erste Aminoalkohol (**A**) und/oder der zweite Aminoalkohol (**E**) ein β-Aminoalkohol. Damit ist insbesondere gemeint, dass die Amingruppe im ersten Aminoalkohol (**A**) und/oder im zweiten Aminoalkohol (**E**) relativ zur Hydroxylgruppe in β-Position oder an einem β-Kohlenstoffatom gebunden ist. Bei mehreren Alkoholgruppen und/oder Amingruppen gilt dies insbesondere für sämtliche dieser funktionellen Gruppen. Entsprechend sind die Hydroxylgruppe der Alkoholgruppe und das Stickstoffatom der Amingruppen insbesondere an zwei unterschiedlichen und direkt benachbarten Kohlenstoffatomen gebunden.

Ebenso hat es sich als vorteilhaft herausgestellt, wenn im ersten Aminoalkohol (**A**) und/oder im zweiten Aminoalkohol (**E**) die Anzahl an Alkoholgruppen grösser ist als die Anzahl an Amingruppen. Im Speziellen ist die Anzahl an Alkoholgruppen oder Hydroxygruppen gleich der Anzahl der Amingruppen plus 1, 2, 3 oder 4. Dadurch wird eine optimale Wirkung erreicht.

Mit Vorteil liegt ein Gewichtsverhältnis des ersten Aminoalkohols (**A**) zum zweiten Aminoalkohol (**E**) im Bereich von 100:1 - 1:100, bevorzugt 50:1 - 1:50, weiter bevorzugt 10:1 - 1:10. Derartige Gewichtsverhältnisse ergeben besonders hohe Frühfestigkeitswerte.

Der erste Aminoalkohol (**A**) und/oder der zweite Aminalkohol (**E**) können z.B. als Reinsubstanz, insbesondere mit einer Reinheit von ≥ 95 Gew.-%, eingesetzt werden.

Unabhängig voneinander werden die beiden Aminoalkohol (**A**) und (**E**) bevorzugt in flüssiger Form verwendet, insbesondere als Lösung oder Dispersion. Bevorzugt sind wässrige Lösungen und/oder Dispersionen mit einem Anteil der Aminoalkohole von jeweils von 5 - 99 Gew.-%, bevorzugt 20 - 70 Gew.-%, insbesondere 40 - 60 Gew.-%. Damit wird eine optimale Vermischung erreicht.

Dabei ist es möglich, einen der beiden Aminoalkohole als Reinsubstanz und den anderen der beiden Aminoalkohole als Lösung oder Dispersion einzusetzen.

Grundsätzlich können die beiden Aminoalkohol (**A**) und (**E**) unabhängig voneinander aber auch in fester Form eingesetzt werden, z.B. als Pulver und/oder auf einem festen Trägermaterial aufgebracht.

Gemäss einer weiteren vorteilhaften Ausführungsform liegt im erfindungsgemässen Erhärtungsbeschleuniger zusätzlich wenigstens eine weitere erhärtungsbeschleunigende Substanz vor.

Grundsätzlich können hierfür eine Vielzahl von dem Fachmann bekannten Substanzen eingesetzt werden. Besonders vorteilhaft umfasst die weitere erhärtungsbeschleunigende Substanz jedoch ein oder mehrere der folgenden Vertreter umfasst:
a) ein oder mehrere Alkali- und/oder Erdalkalinitrate
b) ein oder mehrere Alkali- und/oder Erdalkalinitrite
c) ein oder mehrere Alkali- und/oder Erdalkalithiocyanate
d) ein oder mehrere α-Hydroxycarbonsäuren
e) ein oder mehrere Alkali- und/oder Erdalkalihalogenide
f) Glyzerin und/oder Glyzerinderivate
g) ein oder mehrere Glykole und/oder Glykolderivate
h) ein oder mehrere Aluminiumsalze
i) ein oder mehrere Alkali- und/oder Erdalkalihydroxide.

Wie es sich gezeigt hat, sind die erfindungsgemässen Kombinationen von Aminoalkoholen mit diesen Vertretern im Allgemeinen kompatibel.

Ebenso kann es vorteilhaft sein, wenn im Erhärtungsbeschleuniger des Weiteren wenigstens ein Zusatzmittel, insbesondere ein Betonzusatzmittel und/oder ein Mörtelzusatzmittel, enthalten ist. Das wenigstens eine Zusatzmittel umfasst insbesondere einen Entschäumer, einen Farbstoff, ein Konservierungsmittel, ein Fliessmittel, einen Verzögerer, einen Luftporenbildner, einen Schwindreduzierer und/oder einen Korrosionsinhibitor oder Kombinationen davon.

Mit Vorteil beinhaltet das wenigstens eine Zusatzmittel ein Fliessmittel. Dieses beinhaltet im Speziellen ein Polycarboxylat, insbesondere einen Polycaboxylatether. Insbesondere ist das Fliessmittel ein Kammpolymer umfassend ein Polycarboxylatrückgrat mit daran gebundenen Polyetherseitenketten. Die Seitenketten sind dabei insbesondere über Ester-, Ether- und/oder Amidgruppen an das Polycarboxylatrückgrat gebunden.

Entsprechende Polycarboxylatether und Herstellungsverfahren sind beispielsweise offenbart in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden. Die Offenbarung dieser genannten Patentschriften wird hiermit insbesondere durch Bezugnahme eingeschlossen.

Derartige Kammpolymere werden auch von Sika Schweiz AG unter der Handelsnamenreihe ViscoCrete® kommerziell vertrieben.

Ein weiterer Aspekt der vorliegenden Erfindung betrifft eine Bindemittelzusammensetzung enthaltend ein mineralisches Bindemittel und einen wie vorstehend beschriebenen Erhärtungsbeschleuniger.

Der erste Aminoalkohol (**A**) und der zweite Aminoalkohol (**E**) weisen als Reinsubstanz bezogen auf das mineralische Bindemittel bevorzugt jeweils einen

Anteil von 0.01 - 6 Gew.-%, insbesondere 0.01 - 4 Gew.-%, weiter bevorzugt 0.025 - 3 Gew.-%, auf. Bei derartigen Anteilen wird eine optimale Wirkung des Erhärtungsbeschleunigers erzielt.

Mit Vorteil ist zudem ein wie vorstehend beschriebenes Fliessmittel, insbesondere ein Polycarboxylatether vorhanden. Falls vorhanden, weist das Fliessmittel bezogen auf das mineralische Bindemittel mit Vorteil einen Anteil von 0.01 - 6 Gew.-%, insbesondere 0.1-4 Gew.-%, weiter bevorzugt 0.5 - 3 Gew.-%, auf. Aufgrund der Kombination des erfindungsgemässen Erhärtungsbeschleunigers und des Fliessmittels kann die Verarbeitbarkeit der Bindemittelzusammensetzung verbessert werden und zugleich werden höhere Druckfestigkeiten erreicht. Wie sich gezeigt hat, beeinträchtigt das Fliessmittel die Wirkung des Erhärtungsbeschleunigers dabei kaum oder gar nicht.

In einer weiteren bevorzugten Ausführungsform enthält die Bindemittelzusammensetzung zusätzlich feste Aggregate, insbesondere Kies, Sand und/oder Gesteinskörnungen. Entsprechende Bindemittelzusammensetzungen können beispielsweise als Mörtelmischungen oder Betonmischungen eingesetzt werden.

Insbesondere enthält die Bindemittelzusammensetzung zusätzlich Wasser, wobei ein Gewichtsverhältnis von Wasser zu mineralischem Bindemittel bevorzugt im Bereich von 0.25 - 0.8, insbesondere 0.3 - 0.6, bevorzugt 0.35 - 0.5, liegt. Derartige Bindemittelzusammensetzungen lassen sich als Mörtelmischungen oder Betonmischungen direkt verarbeiten.

Ein zusätzlicher Aspekt der vorliegenden Erfindung bezieht sich auf einen Formkörper, welcher erhältlich ist durch Aushärten einer wie vorstehend beschriebenen Bindemittelzusammensetzung nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Weitere Aspekte der Erfindung betreffen verschiedene Verwendungen des erfindungsgemässen Erhärtungsbeschleunigers.

Insbesondere lässt der erfindungsgemässe Erhärtungsbeschleunigers zur Beschleunigung der Erhärtung von mineralischen Bindemittelzusammensetzungen, insbesondere zementösen Bindemittelzusammensetzungen verwenden.

Ebenso eignet sich der erfindungsgemässe Erhärtungsbeschleuniger zur Erhöhung der Frühdruckfestigkeit, insbesondere der Druckfestigkeit nach 24 Stunden, von mineralischen Bindemittelzusammensetzungen, bevorzugt zementösen Bindemittelzusammensetzungen.

Die mineralischen Bindemittelzusammensetzungen sind dabei wie vorstehend beschrieben definiert.

### Ausführungsbeispiele

### 1. Verwendete Substanzen und Methoden

### 1.1 Aminoalkohole

Folgende Aminoalkohole wurden für die Ausführungsbeispiele verwendet (Tabelle 1):

**Tabelle 1: Verwendete Aminoalkohole**

| **Abkürzung** | **Substanz** | **CAS-#** | **Verwendungsform** |
|---|---|---|---|
| TRIS | Tris-(hydroxymethyl)-aminomethan | 77-86-1 | 40 Gew.-% in H₂O |
| MDEA | N-Methyldiethanolamin | 105-59-9 | Reinsubstanz |
| DEA | Diethanolamin | 111-42-2 | 90 Gew.-% in H₂O |
| AMPD | 2-Amino-2-methyl-1,3-propandiol | 115-69-5 | 50 Gew.-% in H₂O |
| TiPA | Triisopropanolamin | 122-20-3 | 50 Gew.-% in H₂O |
| THPED | N,N,N',N'-Tetrakis(2-hydroxypropyl)-ethylendiamin | 102-60-3 | 50 Gew.-% in H₂O |
| MDiPA | N-Methyldiisopropanolamin | 4402-30-6 | Reinsubstanz |

Sämtliche der in Tabelle 1 aufgeführten Substanzen sind kommerziell bei verschiedenen Anbietern in Reinform (Reinheit > 97%) erhältlich.

TRIS, DEA, AMPD und TiPA, welche in Reinform fest oder hochviskos sind, wurden in Form von wässrigen Lösungen mit den in Tabelle 1 angegebenen Anteilen an Reinsubstanzen eingesetzt.

Bei TRIS, MDEA, DEA und AMPD handelt es sich um Aminoalkohole, welche ausschliesslich primäre Alkoholgruppen aufweisen. Jeder dieser Aminoalkohole verfügt über genau 1 Amingruppe, welche relativ zu den Hydroxylgruppen in β-Position steht.

TiPA, THPED und MDiPA sind Aminoalkohole, welche ausschliesslich sekundäre Alkoholgruppen sowie tertiäre Amingruppen aufweisen. Die Amingruppen stehen dabei relativ zu den Hydroxylgruppen ebenfalls in β-Position.

### 1.2 Bereitstellung der Erhärtungsbeschleuniger

Die Erhärtungsbeschleuniger für die Vergleichsversuche als auch für die erfindungsgemässen Versuche wurden jeweils dem Anmachwasser für die Mörtelmischungen zugemischt, welches anschliessend zum Anrühren der Mörtelmischungen verwendet wurde.

### 1.3 Weitere Zusatzmittel

Bei sämtlichen der nachstehend beschriebenen Mörtelversuche wurde ein modifiziertes Polycarboxylat in Form von Sika® ViscoCrete®-3081 S als Fliessmittel eingesetzt. Sika® ViscoCrete®-3081 S ist ein Kammpolymer mit Polycarboxylatrückgrat und über Estergruppen gebundenen Polyalkylenoxid-Seitenketten. Das Fliessmittel wurde in einer Konzentration von 1.0 Gew.-%, bezogen auf das Bindemittel, eingesetzt und ebenfalls vorgängig dem Anmachwasser zugemischt.

### 1.4 Mörtelmischungen

Die Wirksamkeit der erfindungsgemässen Erhärtungsbeschleuniger wurde in Mörtelmischungen getestet. Hierfür wurde ein Mörtel wie in Tabelle 2 spezifiziert verwendet.

**Tabelle 2: Trockenzusammensetzung der verwendeten Mörtelmischungen (Grösstkorn 8 mm).**

| **Komponente** | **Menge [g]** |
|---|---|
| Portlandzement | |
| - Schweizer CEM I 42.5 N | 750 |
| - Feinheit nach Blaine: 3'600 cm²/g | |
| Kalksteinfüller | 141 |
| Sand 0-1 mm | 738 |
| Sand 1-4 mm | 1107 |
| Sand 4-8 mm | 1154 |

Als Zement wurde Schweizer CEM I 42.5 N (= Mischung von Zementen aus Normo 4 [Siggenthal /Holcim AG], Vigier CEM I 42.5N [Vigier Ciment AG] und CEM I 42.5 N [Wildegg /Jura cement] im Gewichtsverhältnis 1:1:1) mit einer Feinheit nach Blaine von 3'600 cm²/g eingesetzt. Die Sande, der Kalksteinfüller und der Zement wurden 1 Minute in einem Hobart-Mischer trocken gemischt. Innerhalb von 30 Sekunden wurde das Anmachwasser, in dem das Fliessmittel (1.0 Gew.-% bezogen auf Zement) und gegebenenfalls der Erhärtungsbeschleuniger gelöst oder dispergiert war, zugegeben und noch weitere 2.5 Minuten gemischt. Die Gesamt-Mischzeit nass dauerte jeweils 3 Minuten. Der Wasser/Zement-Wert (w/z-Wert) betrug durchwegs 0.4.

### 1.5 Testverfahren

Zur Bestimmung der Wirksamkeit der erfindungsgemässen Erhärtungsbeschleuniger wurde die Druckfestigkeit der Mörtelmischungen 24 h Stunden bzw. 1 Tag (1 d) sowie 7 Tage (7d) nach dem Anmachen der Mörtelmischungen bestimmt. Dabei wurde unmittelbar nach dem Anmachen der Mörtelmischungen auch das jeweilige Ausbreitmass (ABM) gemessen.

Die Prüfung zur Bestimmung der Druckfestigkeit (in N/mm²) erfolgte an Prismen (40 x 40 x 160mm) gemäss Norm EN 12390-1 bis 12390-4. Das Ausbreitmass (ABM) des Mörtels wurde gemäss EN 1015-3 bestimmt.

### 2. Individuelle Aminoalkohole

Die in Kapitel 1.1 genannten Aminoalkohole wurden zu Vergleichszwecken einzeln und in verschiedenen Dosierungen als Erhärtungsbeschleuniger in Mörtelversuchen eingesetzt (Versuche **M1 - M14**).

Daraufhin wurden, wie vorstehend beschrieben (Kapitel 1.4), die Druckfestigkeit sowie das Ausbreitmass der jeweiligen Mörtelmischungen bestimmt. **R** ist eine Referenzprobe, welche keinen Erhärtungsbeschleuniger bzw. Aminoalkohol enthält, ansonsten aber eine identische Zusammensetzung aufweist, wie die Versuche **M1 - M14**.

Tabelle 3 gibt einen Überblick über die Wirkung der verschiedenen Aminoalkohole in Mörtelmischungen. Die Aminoalkohole wurden dabei bezüglich ihrem Strukturtyp mit "**A**" oder "**E**" gekennzeichnet. "**A**"-Typen entsprechen den vorgängig beschriebenen ersten Aminoalkoholen mit einer primären Alkoholgruppe, während "**E**"-Typen den zweiten Aminoalkoholen mit sekundären Alkoholgruppen entsprechen.

Für jeden Aminoalkohol sind jeweils zwei Dosierungen angegeben: Eine Dosierung entspricht der optimalen Dosierung, welche für den jeweiligen Aminoalkohol die bestmögliche Druckfestigkeitssteigerung ergibt. Eine weitere und weniger effektive Dosierung ist jeweils zu Vergleichszwecken aufgeführt.

Die Dosierungen beziehen sich auf den Bindemittelgehalt bzw. den in der Mörtelmischung vorliegenden Zementgehalt. Bei TRIS, DEA, AMPD, TiPA und THPED beziehen sich die Dosierungen auf die in Kapitel 1.1 genannten Lösungen, bei den übrigen Aminoalkoholen auf die jeweilige unverdünnte Substanz in Reinform (Reinheit > 97%).

**Tabelle 3: Wirkung individueller Aminoalkohole bei verschiedenen Dosierungen. Die Spalten "1 d" und "7 d" geben die Druckfestigkeiten nach 1 Tag bzw. 7 Tagen an. Die Spalten "Δ (1d)" und "Δ (7d)" geben die prozentuale Veränderung der jeweiligen Druckfestigkeit bezogen auf die Referenzprobe R an.**

| **Nr.** | **Aminoalkohol (Typ)** | **Dosierung [Gew.-%]** | **ABM [mm]** | **Druckfestigkeit [MPa]/ Steige-rung** | | | |
|---|---|---|---|---|---|---|---|
| | | | | 1 d | Δ (1d) | 7d | Δ (7d) |
| **R** | Ohne (Referenz) | 0 | 194 | 31.1 | 0% | 58.1 | 0% |
| **M1** | TRIS (A) | 0.1 | 200 | 30.3 | -3% | 59.0 | +2% |
| **M2** | | 0.4 | 192 | 32.2 | +4% | 58.0 | 0% |
| **M3** | MDEA (A) | 0.05 | 201 | 36.9 | +13% | 62.0 | +7% |
| **M4** | | 0.15 | 191 | 37.0 | +13% | 59.6 | +3% |
| **M5** | DEA (A) | 0.1 | 186 | 30.3 | -3% | 57.3 | -1% |
| **M6** | | 0.3 | 182 | 34.5 | +11% | 59.9 | +3% |
| **M7** | AMPD (A) | 0.3 | 186 | 33.6 | +8% | 59.8 | +3% |
| **M8** | | 0.9 | 188 | 35.5 | +14% | 60.4 | +4% |
| **M9** | TiPA (E) | 0.1 | 196 | 35.1 | +13% | 63.7 | +10% |
| **M10** | | 0.3 | 195 | 35.2 | +13% | 63.3 | +9% |
| **M11** | THPED (E) | 1.0 | 175 | 36.4 | +13% | 62.1 | +7% |
| **M12** | | 2.0 | 165 | 35.7 | +11% | 61.2 | +5% |
| **M13** | MDiPA (E) | 0.3 | 192 | 34.8 | +16% | 61.7 | +6% |
| **M14** | | 0.9 | 183 | 34.5 | +15% | 58.7 | +1% |

### 3. Erfindungsgemässe Erhärtungsbeschleuniger

Tabelle 4 gibt einen Überblick über verschiedene Mörtelversuche (**M21 - M34**) mit erfindungsgemässen Erhärtungsbeschleunigern. **R** ist wiederum eine Referenzprobe, welche keinen Erhärtungsbeschleuniger bzw. Aminoalkohol enthält, ansonsten aber eine identische Zusammensetzung aufweist, wie die Versuche **M21 - M34**.

Die erfindungsgemässen Erhärtungsbeschleuniger bestehen dabei aus einem ersten Aminoalkohol (**A**) (Spalte A in Tabelle 2; Strukturtyp "A") und einem zweiten Aminoalkohol (**E**) (Spalte E in Tabelle 2; Strukturtyp "E"). In Klammern ist die jeweilige Dosierung der Aminoalkohole (Gew.-% bezogen auf Zement) angegeben. Bezüglich der Dosierungen gilt das Gleiche, wie bereits in Kapitel 1.4 ausgeführt.

Zu jedem Mörtelversuch sind in der Spalte "Druckfestigkeitssteigerung" die jeweiligen prozentualen Erhöhungen der Druckfestigkeit aufgrund der erfindungsgemässen Erhärtungsbeschleuniger gegenüber der Referenzprobe **R** nach 1 Tag [Spalte "Δ (1d)"] und 7 Tagen [Spalte "Δ (7d)"] angegeben.

Die Wirkung der Erhärtungsbeschleuniger wurde zudem in entsprechend den 4 folgenden Kategorien eingeteilt:
Kategorie "-": Steigerung der Druckfestigkeit mit Erhärtungsbeschleuniger (Kombination aus Aminoalkoholen (**A**) und (**E**)) geringer als Steigerung der Druckfestigkeit mit der besseren der beiden Einzelkomponenten (Aminoalkohol (**A**) oder Aminoalkohol (**E**));
Kategorie "=": Steigerung der Druckfestigkeit mit Erhärtungsbeschleuniger gleich wie Steigerung der Druckfestigkeit mit der besseren der beiden Einzelkomponenten;
Kategorie "+": Steigerung der Druckfestigkeit mit Erhärtungsbeschleuniger höher als Steigerung der Druckfestigkeit mit der besseren der beiden Einzelkomponente;
Kategorie "++": Steigerung der Druckfestigkeit mit Erhärtungsbeschleuniger höher als Summe der Druckfestigkeitssteigerungen der beiden Einzelkomponenten zusammen gerechnet.

Die entsprechende Kategorie ist in Tabelle 4 jeweils in der Spalte "Kat." vermerkt.

**Tabelle 4: Wirkung erfindungsgemässer Erhärtungsbeschleuniger.**

| **Nr.** | **A (Dosierung) E (Dosierung)** | | **Druckfestigkeitssteigerung** | | | |
|---|---|---|---|---|---|---|
| | | | Δ (1d) | Kat. | Δ (7d) | Kat. |
| **R** | Ohne | Ohne | 0% | = | 0% | = |
| **M21** | TRIS (0.4%) | TiPA (0.1%) | +20% | ++ | +10% | = |
| **M22** | | TiPA (0.3%) | +21% | ++ | +11% | ++ |
| **M23** | | THPED (1.0%) | +22% | ++ | +6% | - |
| **M24** | | THPED (2.0%) | +21% | ++ | +8% | ++ |
| **M25** | | MDiPA (0.3%) | +22% | ++ | +7% | ++ |
| **M26** | | MDiPA (0.9%) | +17% | + | +5% | ++ |
| **M27** | TRIS (0.1%) | TiPA (0.1%) | +16% | ++ | +11% | + |
| **M28** | | MDiPA (0.3%) | +17% | ++ | +6% | = |
| **M29** | DEA (0.1%) | TiPA (0.3%) | +19% | ++ | +11% | ++ |
| **M30** | | THPED (1.0%) | +19% | ++ | +8% | ++ |
| **M31** | | MDiPA (0.3%) | +19% | ++ | +8% | ++ |
| **M32** | MDEA (0.15%) | THPED (1.0%) | +20% | + | +1% | - |
| **M33** | AMPD (0.9%) | MDiPA (0.3%) | +18% | + | +4% | - |
| **M34** | AMPD (0.3%) | THPED (1.0%) | +19% | + | +10% | + |

Vergleich man z.B. Erhärtungsbeschleuniger bestehend aus Kombinationen von TRIS in der bestwirksamen Dosierung (0.4 Gew.-%) mit TIPA, THPED und MDiPA (Versuche **M21 - M26**), so werden nach 1 Tag durchwegs Druckfestigkeitssteigerungen erreicht, welche über den Druckfestigkeitssteigerungen der jeweiligen einzelnen Aminoalkohole liegen (Kategorie "+"). Bei den Versuchen **M21 - M25** liegen die Druckfestigkeitssteigerungen sogar über der Summe der Druckfestigkeitssteigerungen der einzelnen Aminoalkohole (Kategorie "++"). Dies ist umso erstaunlicher, als TRIS als Individualsubstanz keine besonders herausragende Druckfestigkeitssteigerung ergibt (Tabelle 3). Entsprechende Resultate werden für die meisten Kombinationen auch nach 7 Tagen erreicht.

Vergleichbare Resultate wurden selbst für Erhärtungsbeschleuniger bestehend aus Kombinationen von TRIS in der weniger wirksamen Dosierung (0.1 Gew.-%) mit TiPA und MDiPA (Versuche **M27** und **M28**) gefunden. Dabei ist insbesondere Folgendes zu bemerken: TiPA und MDiPA in den optimalen Dosierungen ergeben als Einzelsubstanzen Druckfestigkeitssteigerung von lediglich 13% bzw. 12% (siehe Tabelle 3). TRIS in der verwendeten Dosierung von 0.1% resultiert als Einzelsubstanz sogar in einer Druckfestigkeitsverminderung von -3% (siehe Tabelle 3). Entsprechend der erfindungsgemässen Kombination (Versuche **M27** und **M28**) werden aber Druckfestigkeitssteigerungen von 16% bzw. 17% erreicht, was deutlich über bestwirksamen Einzelkomponente (TiPA bzw. MDiPA) und auch klar über der Summe der Druckfestigkeitssteigerungen der einzelnen Komponenten zusammengerechnet liegen (siehe Tabelle 4).

Ein analoges Bild ergibt sich für Erhärtungsbeschleuniger bestehend aus DEA und jeweils einem Aminoalkohol mit Strukturtyp **E**, namentlich TiPA, THPED und MDiPA (Versuche **M29** - **M31**). Selbst wenn DEA in der an sich weniger guten Konzentration von 0.1% eingesetzt wird, ergeben sich im Zusammenspiel mit TiPA, THPED und MDiPA in optimalen Konzentrationen Druckfestigkeitssteigerungen, welche signifikant höher sind als die Werte, welche mit den bestwirksamen Einzelkomponente erreichbar sind und auch klar über der Summe der Druckfestigkeitssteigerungen der einzelnen Komponenten zusammengerechnet liegen (vgl. Tabelle 4).

Überraschend ist auch, dass die Wirkung des als Individualsubstanz bestwirksamen Aminoalkohols mit Strukturtyp **A** (MDEA) durch Kombination mit dem bestwirksamen Aminoalkohol mit Strukturtyp E (THPED), nochmals gesteigert werden kann (vgl. Versuch **M32**). Der entsprechende Erhärtungsbeschleuinger auf Basis von MDEA und THPED ist somit wirksamer als die am besten wirksame Einzelkomponente (MDEA) der Aminoalkoholkombination.

Auch Erhärtungsbeschleuniger auf Basis von AMPD und THPED bzw. MDiPA stellen vorteilhafte Kombinationen dar (siehe Versuche **M33** und **M34**).

### 4. Vergleichsversuche

Zu Vergleichszwecken wurden nicht-erfindungsgemässe Erhärtungsbeschleuniger basierend auf Kombinationen von unterschiedlichen Aminoalkoholen mit Strukturtyp **A** untersucht (Versuche **V1 - V6** in Tabelle 5). Dabei wurde jeweils ein Aminoalkohol mit Strukturtyp **A** in der bestwirksamen Dosierung mit einem weiteren Aminoalkohol mit Strukturtyp **A** ebenfalls in der bestwirksamen Dosierung getestet. Tabelle 5 gibt eine entsprechende Übersicht der Resultate. **R** ist. wiederum eine Referenzprobe, welche keinen Erhärtungsbeschleuniger bzw. Aminoalkohol enthält, ansonsten aber eine identische Zusammensetzung aufweist, wie die Vergleichsversuche **V1 - V6**.

**Tabelle 5: Nicht-erfindungsgemässe Kombinationen von Aminoalkoholen mit Strukturtyp A.**

| **Nr.** | **A (Dosierung)** | **A (Dosierung)** | **Druckfestigkeitssteigerung** | | | |
|---|---|---|---|---|---|---|
| | | | Δ (1d)¹ | kat. | Δ (7d)² | Kat. |
| **R** | Ohne | Ohne | 0% | = | 0% | = |
| **V1** | TRIS (0.4%) | MDEA (0.15%) | +12% | - | +4% | + |
| **V2** | | DEA (0.3%) | +7% | - | +1% | - |
| **V3** | | AMPD (0.9%) | +1% | - | +2% | - |
| **V4** | MDEA (0.15%) | DEA (0.3%) | +11% | - | -2% | - |
| **V5** | | AMPD (0.9%) | +12% | - | -1% | - |
| **V6** | DEA (0.3%) | AMPD (0.9%) | +8% | - | -8% | - |

Analoge Versuche wurden auch mit Kombinationen von Aminoalkoholen mit Strukturtyp **E** durchgeführt (Versuche **V7 - V9** in Tabelle 6).

**Tabelle 6: Nicht-erfindungsgemässe Kombinationen von Aminoalkoholen mit Strukturtyp E.**

| **Nr.** | **E (Dosierung)** | **E (Dosierung)** | **Druckfestigkeitssteigerung** | | | |
|---|---|---|---|---|---|---|
| | | | Δ (1d)¹ | Kat. | Δ (7d)² | Kat. |
| **R** | Ohne | Ohne | 0% | = | 0% | = |
| **V7** | TiPA (0.3%) | THPED (1.0%) | +13% | - | +6% | - |
| **V8** | | MDiPA (0.3%) | +13% | - | +1% | - |
| **V9** | THPED (1.0%) | MDiPA (0.3%) | +15% | - | +6% | - |

Wie den Resultaten in den Tabellen 5 und 6 zu entnehmen ist, ergeben nicht-erfindungsgemässe Kombinationen von Aminoalkoholen in keinem Fall Steigerungen der Druckfestigkeiten im Vergleich mit der bestwirksamen Einzelkomponente. In den meisten Fällen wird sogar eine signifikante Verschlechterung erzielt.

Die vorstehend beschriebenen Ausführungsformen sind jedoch lediglich als illustrative Beispiele zu verstehen, welche im Rahmen der Erfindung beliebig abgewandelt werden können.

Insbesondere wurde gefunden, dass beispielsweise die für die Versuche **M21 - M34** verwendeten erfindungsgemässen Aminoalkoholpaare auch vorgängig miteinander vermischt und erst danach dem Anmachwasser zugegeben werden können.

## Patentansprüche

1. Erhärtungsbeschleuniger für mineralische Bindemittelzusammensetzungen, insbesondere zementöse Bindemittelzusammensetzungen, beinhaltend eine Kombination aus
a) einem ersten Aminoalkohol (**A**) mit wenigstens einer primären Alkoholgruppe und
b) einem zweiten Aminoalkohol (**E**) mit wenigstens einer sekundären Alkoholgruppe.

2. Erhärtungsbeschleuniger nach Anspruch 1, **dadurch gekennzeichnet, dass** der erste Aminoalkohol (**A**) wenigstens zwei primäre Alkoholgruppen aufweist.

3. Erhärtungsbeschleuniger nach einem der vorangehenden Ansprüche,
**dadurch gekennzeichnet, dass** sämtliche Alkoholgruppen des ersten Aminalkohols (**A**) ausschliesslich primäre Alkoholgruppen sind und/oder dass der erste Aminoalkohol (**A**) ausschliesslich primäre und/oder sekundäre Amingruppen aufweist.

4. Erhärtungsbeschleuniger nach einem der vorangehenden Ansprüche,
**dadurch gekennzeichnet, dass** der erste Aminoalkohol (**A**) Tris-(hydroxymethyl)-aminomethan, N-Methyldiethanolamin, Diethanolamin und/oder 2-Amino-2-methyl-1,3-propandiol ist, wobei bevorzugt der erste Aminoalkohol (**A**) Tris-(hydroxymethyl)-aminomethan und/oder N-Methyldiethanolamin ist.

5. Erhärtungsbeschleuniger nach einem der vorangehenden Ansprüche,
**dadurch gekennzeichnet, dass** der zweite Aminoalkohol (**E**) wenigstens zwei sekundäre Alkoholgruppen aufweist.

6. Erhärtungsbeschleuniger nach einem der vorangehenden Ansprüche,
**dadurch gekennzeichnet, dass** sämtliche Alkoholgruppen des zweiten Aminalkohols (**E**) ausschliesslich sekundäre Alkoholgruppen sind und/oder dass der zweite Aminoalkohol (**E**) ausschliesslich tertiäre Amingruppen aufweist.

7. Erhärtungsbeschleuniger nach einem der vorangehenden Ansprüche,
**dadurch gekennzeichnet, dass** der zweite Aminoalkohol (**E**) Triisopropanolamin, N,N,N',N'-Tetrakis-(2-hydroxypropyl)-ethylendiamin und/oder N-Methyldiisopropanolamin ist, wobei bevorzugt der zweite Aminoalkohol (**E**) N-Methyldiisopropanolamin ist.

8. Erhärtungsbeschleuniger nach einem der vorangehenden Ansprüche,
**dadurch gekennzeichnet, dass** ein Gewichtsverhältnis des ersten Aminoalkohols (**A**) zum zweiten Aminoalkohol (**E**) im Bereich von 100: 1-1:100, bevorzugt 50:1-1:50, weiter bevorzugt 10:1 - 1:10, liegt.

9. Erhärtungsbeschleuniger nach einem der vorangehenden Ansprüche,
**dadurch gekennzeichnet, dass** zusätzlich wenigstens ein Zusatzmittel, insbesondere ein Betonzusatzmittel und/oder ein Mörtelzusatzmittel, enthalten ist.

10. Erhärtungsbeschleuniger nach einem der vorangehenden Ansprüche,
**dadurch gekennzeichnet, dass** das wenigstens eine Zusatzmittel ein Fliessmittel umfasst, wobei das Fliessmittel bevorzugt ein Polycaboxylat ist, insbesondere ein Kammpolymer umfassend ein Polycarboxylatrückgrat mit über Ester-, Ether- und/oder Amidgruppen gebundenen Polyetherseitenketten.

11. Bindemittelzusammensetzung enthaltend ein mineralisches Bindemittel, insbesondere ein hydraulisches Bindemittel, und einen Erhärtungsbeschleuniger nach einem der Ansprüche 1-10.

12. Bindemittelzusammensetzung nach Anspruch 11, **dadurch gekennzeichnet, dass** erste Aminoalkohol (**A**) und der zweite Aminoalkohol (E) bezogen auf das mineralische Bindemittel jeweils einen Anteil von 0.01 - 6 Gew.-%, insbesondere 0.01-4 Gew.-%, weiter bevorzugt 0.025 - 3 Gew.-%, aufweisen.

13. Formkörper, erhältlich durch Aushärten einer Bindemittelzusammensetzung nach einem der Ansprüche 11-12 nach Zugabe von Wasser.

14. Verwendung eines Erhärtungsbeschleunigers nach einem der Ansprüche 1 - 10 zur Beschleunigung der Erhärtung von mineralischen Bindemittelzusammensetzungen, insbesondere zementösen Bindemittelzusammensetzungen.

15. Verwendung eines Erhärtungsbeschleunigers nach einem der Ansprüche 1-10 zur Erhöhung der Frühdruckfestigkeit, insbesondere der Druckfestigkeit nach 24 Stunden, von mineralischen Bindemittelzusammensetzungen, bevorzugt von mineralischen Bindemittelzusammensetzungen.
